# EUROPEAN PATENT APPLICATION

(11) **EP 3 696 926 A1**
(43) Date of publication of application: **19.08.2020**
(21) Application number: 20157513.1
(22) Date of filing: 14.02.2020
(51) Int. Cl.: H02B 1/28, H02B 1/42, H02G 3/08, G01D 11/24

(54) **ENCLOSURE**

(30) Priority: 15.02.2019 GB 201902104
(71) Applicant: Wolseley UK Limited, Warwick CV34 6DY (GB)
(72) Inventor: Lambert, Neal John, Warwick, Warwickshire CV34 6DY (GB); Hellewell, Alvin, Warwick, Warwickshire CV34 6DY (GB)
(74) Representative: Barker Brettell LLP

(57) **Abstract**

An enclosure (1) defining at least three chambers (5, 6, 7) separated by a plurality of walls (8), the chambers comprising a first chamber (6), a second chamber (5) and a third chamber (7), the enclosure further comprising an electricity meter (3) in the first chamber (6), a gas meter (2) in the second chamber (5), and charging circuitry (4) for an electric vehicle in the third chamber (7). Further enclosures with cradles for installation on a building are also enclosed.

## Description

This invention relates to enclosures, particularly for gas and electricity meters, and optionally also charging circuitry for electric vehicles. It also relates to methods of making and installing such enclosures.

Most domestic dwellings certainly in the United Kingdom are connected to a public electricity network, and many are also connected to a public gas network. Herein, we are using "public" in the sense of serving multiple users, and "gas" to refer to a gaseous fuel, such as a fuel such as natural gas (as is the case at present) or potentially an alternative fuel such as hydrogen in the future. It is generally required that such supplies are metered so that the occupier of every dwelling can be billed based upon their usage.

Currently, particularly in the United Kingdom, it is well known to provide "meter boxes"; small cupboards or enclosures commonly placed on the outer wall of a dwelling in order to house gas or electricity meters. Each meter will have their own meter box. Installing these on a new build dwelling is laborious; the enclosures must first be installed, then the meters fitted to them, then connections made to the dwelling's networks and separately to the public supply networks. Often, different workers or teams are required to do each task.

It is also known to provide charging facilities for electric vehicles (EVs), such as electric cars or motorcycles. Typically, these will be of the form of a housing attached to the outside of a dwelling, connected via a cable or through the dwelling's electricity network to the electricity supply from the meter.

According to a first aspect of the invention, there is provided an enclosure defining at least three chambers separated by a plurality of walls, the chambers comprising a first chamber, a second chamber and a third chamber, the enclosure further comprising an electricity meter in the first chamber, a gas meter in the second chamber, and charging circuitry for an electric vehicle in the third chamber.

As such, this conveniently provides for colocation of three devices that have previously been housed separately, thus making installation of all three devices more efficient, with more efficient use of space and resources.

At least one of the walls may comprise a hollow skin filled with fire-retardant material.

As such, this is particularly convenient as it allows for safe separation of the gas and electricity meters and any associated conduits. Furthermore, it can be particularly convenient to manufacture, as the hollow skin can first be moulded to define a void, and then the fire-retardant material introduced filled into the void.

According to a second aspect of the invention, there is provided an enclosure defining at least two chambers separated by a plurality of walls, the chambers comprising a first chamber and a second chamber, the enclosure further comprising an electricity meter in the first chamber and a gas meter in the second chamber, in which at least one of the walls comprises a hollow skin filled with fire-retardant material.

As such, this is particularly convenient as it allows for safe separation of the gas and electricity meters and any associated conduits. Furthermore, it can be particularly convenient to manufacture, as the hollow skin can first be moulded to define a void, and then the fire-retardant material introduced filled into the void.

The enclosure may comprise a third chamber, and may comprise charging circuitry for an electric vehicle in the third chamber.

Typically, a further plurality of the walls will comprise a hollow skin filled with fire-retardant material, with the fire-retardant material of each of the plurality of walls all being connected. The further plurality of the walls may comprise all of the walls. As such, the hollow skins of each of the further plurality of walls may define an interconnecting void filled with the fire-retardant material.

Typically, the fire-retardant material will comprise a fire-retardant foam, such as a fire-retardant polyurethane foam. Typically, the fire retardant material will provide at least one, two or hour fours of integrity and insulation when measured in accordance with British Standards BS 476 Part 20/22 and BS EN 1366-4.

Each of the first and second (and third, if present) chambers may be provided with a hinged door on a front surface of the enclosure.

The charging circuitry may comprise an engagement means, such as a socket or a typically tethered cable, to connect the charging circuitry to the electric vehicle. The engagement means may be on, or pass through, an outer surface of the enclosure; typically, it will be mounted in the door of the third chamber. The charging circuitry may also comprise a switching means, such as a switch or circuit breaker, arranged to switch an electric voltage provided to the charging circuitry. The enclosure may comprise an electrical connection for electrical power which runs from the electricity meter in the first chamber to the charging circuitry in the third chamber.

The enclosure may also comprise a conduit for a ground connection for the charging circuitry, which comprises a passageway from the third chamber through at least one of the walls to an exit point external to the chambers. Typically, the passageway will run within one of the walls along a length of that wall, typically through the fire retardant material.

Each of the first, second and third chambers may be substantially cuboid, with a height and a width. The third chamber may extend across the width of both the first and second chambers; in that case the passageway may run within a wall which separates the first and second chambers, with the length of that wall corresponding to the height of the first and second chambers.

This conveniently allows the charging circuitry to be earthed; such circuitry typically requires separate earthing to the rest of the building (a so-called TT earthing system). This allows an earthing connection to conveniently pass through the enclosure; the position of the exit point can be chosen so that the location of cables and pipes directly beneath the box are known, thus preventing an installer inadvertently damaging such items when installing the earth.

The enclosure may be fitted within the electricity meter, the gas meter and/or the charging circuitry before it is mounted on a building, typically on a wall. As such, the enclosure may be in the state claimed before it is mounted on a building. This is more convenient that prior art approaches, where each individual meter (etc) is mounted into its own separate enclosure after that enclosure is mounted on a building, thus allowing at least two meters and potentially the charging circuitry to be preinstalled in one enclosure that can then be fitted in one operation to the building.

Typically, the building will be a domestic dwelling.

At least one of the electricity meter, the gas meter and the charging circuitry may be arranged to transmit data concerning their operation to a remote location, and/or to receive instructions as to their operation from a remote location. Typically, each of the electricity meter, the gas meter and the charging circuitry may be provided with a transmitter and/or reception circuit. The transmission and/or reception circuits may comprise a wireless communication circuit, such as a Wifi, mobile telephone network or Bluetooth transducer. This allows the operation of each of those units to be monitored or controlled from a remote location.

The enclosure may comprise a light, which comprise a control circuit comprising at least one of a light sensor and a movement sensor. As such, this can illuminate when a user requires illumination, which can be helpful if, for example, charging an electric vehicle at night or trying to read a meter in an overshadowed position.

The following features can apply to either of the first two aspects.

The enclosure may define a fibre chamber, containing apparatus for terminating or splicing a fibre optic cable. This can be useful where a fibre optic cable is used to provide connectivity to a house, as this can be usefully terminated or connected to in the same housing as the other connections in the other chambers.

The apparatus for terminating or splicing a fibre optic cable may comprise a tray arranged to receive an optical fibre and to guide the fibre around at least one loop. The tray may be pivotally mounted in the fourth chamber; the tray may have a retracted position where it is received within the fourth chamber and a protruding position where it protrudes out of the fourth chamber, with a transition between the retracted and protruding positions involving the tray pivoting about the pivotal mounting.

The enclosure may further comprise a cradle by means of which the enclosure is mountable on a building. A body part of the enclosure comprising the walls defining the chambers may be provided with means for engaging the cradle; typically, these may be releasable means (such as screws or the like), or one-time means that, once engaged, do not release (such a ratchet engagement).

According to a third aspect of the invention, there is provided a method of installing the enclosure of the first or second aspects of the invention, comprising taking the enclosure with the gas meter and electricity meter already installed therein and then fixing the enclosure to a building.

Typically, the method would then include connecting a gas supply to the gas meter and an electricity supply to the electricity meter. The method would also comprise connecting the gas meter to a gas network of the building and the electricity meter to an electricity network of the building.

The enclosure may also be installed with the charging circuitry before the enclosure is fixed to the building.

The method may comprise first installing the cradle without the body on the building, and subsequently fixing the body to the cradle. As such, the cradle can be fitted at a first convenient time (such as when the building is being built) and the body fitted later (when it is convenient to connect the electricity/gas etc services to the building).

According to a fourth aspect of the invention, there is provided a method of manufacturing an enclosure, the enclosure defining at least two chambers separated by a plurality of walls, the chambers comprising a first chamber for an electricity meter and a second chamber for a gas meter,
the method comprising moulding a body including the walls, in which the walls are hollow defining at least one internal void, and
injecting a fire-resistant material into each internal void.

Thus, a convenient method can be arranged to make the enclosure of the first or second aspect of the invention.

Typically, the walls define a common internal void, such that the void of each walls are continuous. This means that only a single internal void needs to be filled.

The enclosure may be provided with a port through which the fire-resistant material can be injected, and may also be provided with a port through which air in each internal void can be exhausted.

The body may be moulded from a mouldable plastic material, such as a glass reinforced plastic. The step of moulding may comprise rotational moulding.

According to a fifth aspect of the invention, there is provided an enclosure for installation in a building, the enclosure comprising:
a body part defining walls defining at least one chamber and
a cradle by means of which the enclosure is mountable on a building.

The body part may be provided with means for engaging the cradle; typically, these may be releasable means (such as screws or the like), or one-time means that, once engaged, do not release (such a ratchet engagement).

The cradle may be capable of separate installation on the building, such that the cradle can be installed at a first time (typically whilst the building is being built) and the body part installed in the cradle at a later time.

According to a sixth aspect of the invention, there is provided a method of installing the enclosure of the fifth aspect of the invention, comprising fixing the cradle to the building and then fixing the body part to the cradle.

As such, the cradle can be fitted at a first convenient time (such as when the building is being built) and the body fitted later (when it is convenient to connect the electricity/gas etc services to the building).

There now follows, by way of example only, description of embodiments of the invention, described with reference to the accompanying drawings, in which:
**Figure 1** shows a front elevation of an enclosure in accordance with a first embodiment of the invention;

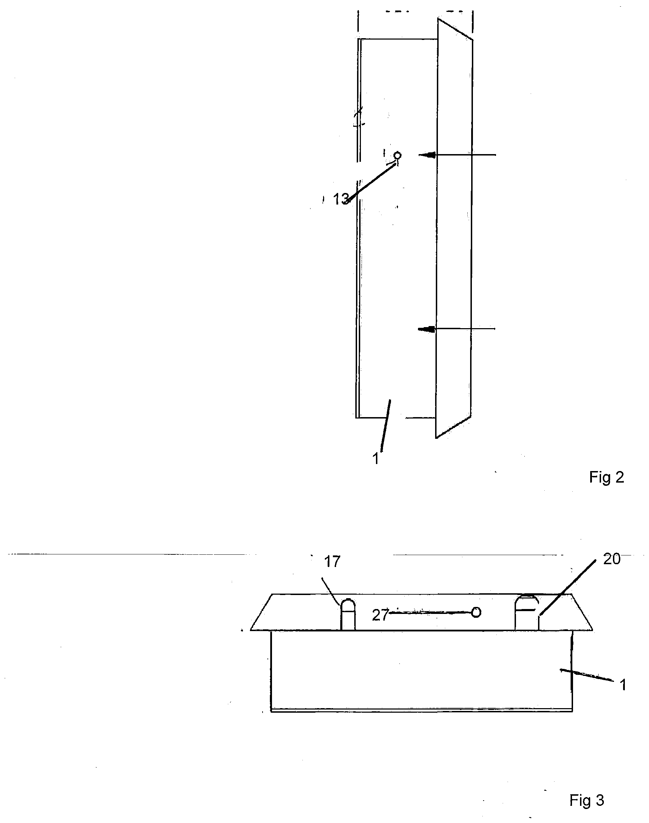

**Figure 2** shows a side elevation of the enclosure of Figure 1;
**Figure 3** shows a plan view from underneath of the enclosure of Figure 1;

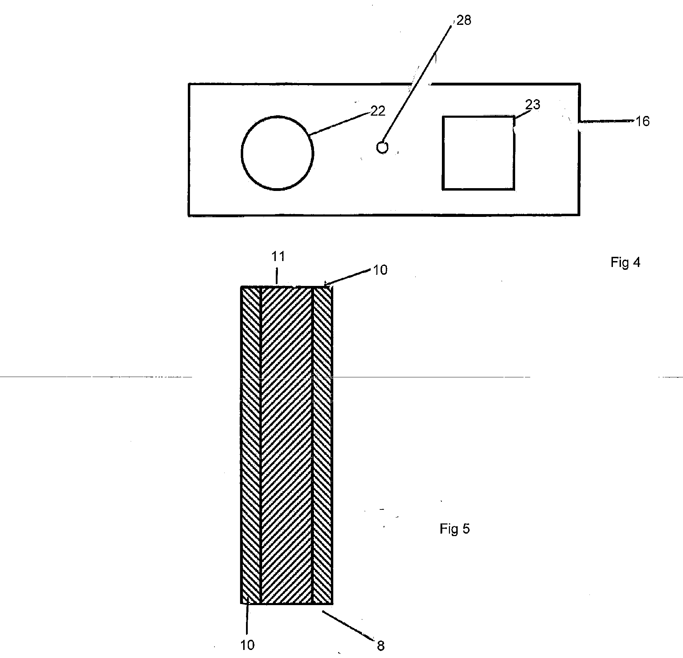

**Figure 4** shows a plan view of one of the doors of the enclosure of Figure 1;
**Figure 5** shows a section through a wall of the enclosure of Figure 1;
**Figure 6** shows a perspective view of an enclosure in accordance with a second embodiment of the invention;
**Figure 7** shows a similar perspective view of the enclosure of Figure 6, with the doors omitted;
**Figure 8** shows a rear perspective view of the enclosure of Figure 6;
**Figure 9** shows a perspective view of the fibre tray of the enclosure of Figure 6;
**Figures 10 and 11** show enlarged perspective views of the tray of Figure 9 in two different positions relative to the enclosure;
**Figure 12** shows a partially cut away perspective view of a cradle for use with the enclosures of the preceding embodiments; and
**Figure 13** shows a cross section through a horizontal slice of the cradle of Figure 12.

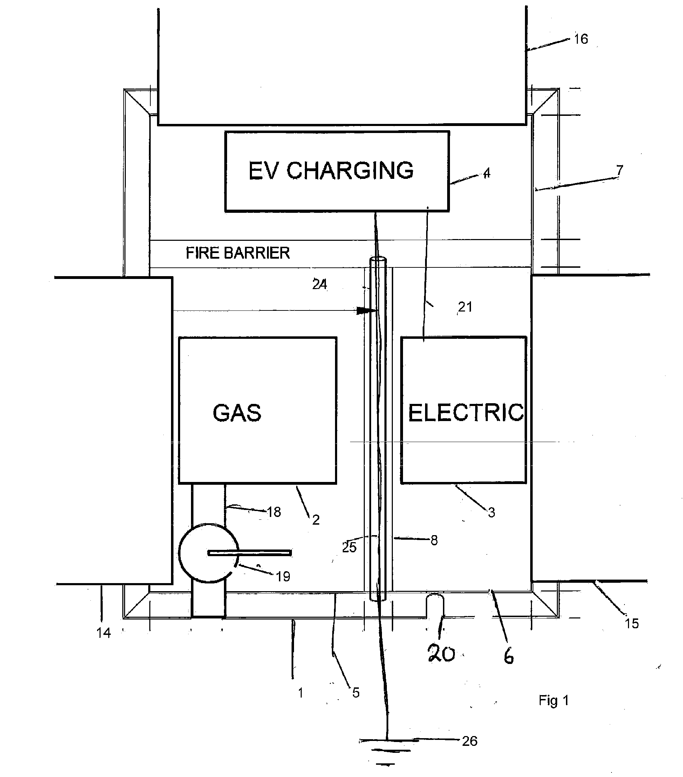

The accompanying drawings show an enclosure 1 for housing a gas meter 2, an electricity meter 3 and charging circuitry 4 for an electric vehicle (EV) in accordance with a first embodiment of the invention. The enclosure 1 comprises walls 8 that form three chambers: a first chamber 5 at the bottom left (as in Figure 1) housing the gas meter 2, a second chamber 6 at the bottom right, adjacent to the first chamber 5 and housing the electricity meter 3, and a third chamber 7 atop the first 5 and second 6 chambers housing the charging circuitry 4.

The walls 8 separating the chambers 5, 6, 7 are all made from a double skin of glass reinforced plastic 10 defining a void into which a fire resistant polyurethane foam has been introduced. The voids of all the walls connect, such that all of the voids can be filled in a single operation by introducing unset foam through a port 13 in the side of the enclosure; a similar port (not shown) can be provided to let air in the voids escape as the foam is introduced. The foam can then be allowed to cure and set in situ. This provides the necessary level of fire resistance between the gas meter 2 and ancillary equipment in the first chamber 5 (which potentially could be leaking gas) and the electricity meter 3 and ancillary equipment in second chamber 6, which are potential sources of sparks and so potential ignition of the gas.

Each of the chambers 5, 6, 7 has corresponding door 14, 15, 16.

The gas meter 2 is connected to an external port 17 on the bottom surface of the enclosure for connection to a public gas network. The connection to the external port 17 is through a pipe 18 and cut off valve 19. The gas meter is provided with a port (not shown) for connection to the gas network of the building which it is to serve after the gas has passed through the meter 2. There may also be a pressure regulator (not shown) connected between the cut off valve 19 and the gas meter 2. Typically, the gas meter 2 will be a smart meter, which is capable of communication with a remote location through the public mobile telephone network (or more locally with Wifi or Bluetooth) both to provide information as to its operation to a remote location and to receive instructions on how it should operate (e.g. to turn off the gas supply). It may be compliant with the SMETS 2 standard.

The electricity meter 3 can be connected to a public electricity network through a port 20 in the bottom of the enclosure. This may be through a master fuse or circuit breaker (not shown). The electricity meter 3 will also be provided with a connection for connecting to the electricity network of the building to which the meter 3 is to serve after the electricity has been metered. Typically, the electricity meter 3 will be a smart meter, which is capable of communication with a remote location through the public mobile telephone network (or more locally with Wifi or Bluetooth) both to provide information as to its operation to a remote location and to receive instructions on how it should operate (e.g. to turn off the electricity supply).

The charging circuitry 4 will typically take an electricity supply from the second chamber 6 through a connector 21. The charging circuitry will typically communicate with the vehicle and switch the supply as required. Whilst some of the charging circuitry 4 will provided in the third chamber 7, two items are provided in the door 16 of the third chamber 7, namely a charging socket 22 and a circuit breaker 23.

The charging socket 22 allows an electric vehicle charging cable to be attached; as such, the charging socket 22 may be an IEC 62196-2 Type 2 socket (also known as a Mennekes socket) or an IEC 62196-3 configuration AA (also known as Chademo) or FF (also known as CCS/Combo socket). Alternatively, it may be any other convenient socket, particular any of the other sockets defined by the above-cited two IEC standards. In an alternative, a captive charging cable can be provided, which will pass through the position of socket 22.

Circuit breaker 23 allows the electricity supply to charging circuitry 4 to be cut off if needed - if, for example, there is a problem with the electric vehicle.

The third chamber is provided with an earth conduit 24 through which an earthing conductor 25 passes. This connects the charging circuitry 4 with an earthing point 26 via a port 27 on the bottom surface of the enclosure 1; electric vehicles require a separate earth to the rest of the building. Rather than passing through either the first 5 or second 6 chambers, the earth conduit 24 passes through the wall 8 separating the first and second chambers, and in particular through the void for the fire resistant foam 11, but typically at a front or back surface to maintain the integrity of the fire barrier formed by the first resistant foam.

The door 16 is also provided with a movement activated light 28. This can illuminate when a user requires illumination, which can be helpful if, for example, charging an electric vehicle at night or trying to read a meter in an overshadowed position.

The installation of the enclosure 1 of this embodiment is much more convenient than with prior art separate enclosures for each of the gas 2 and electricity 3 meters and for the charging circuitry 4.

The enclosure can be supplied with the gas 2 and electricity meters 3 and the charging circuitry in situ before the enclosure 1 is installed in a building. Then, rather than one person installing three boxes, then different people installing each meter, and a further set of different people making the connection to the public gas and electricity networks, a single team of typically two people (one gas certified and one electricity certified) can install the enclosure on a building. Typically, it would be fixed to a wall over the prepared connections to the gas and electricity networks of the building. There may be a recess formed in the building for this purpose. The installer can then connect the gas 2 and electricity 3 meters to the connections to the building; one person can potentially carry out all three tasks.

That same team may also be able to make the connection to the public gas and electricity networks subject to appropriate authorisation.

As such, this represents a significant labour saving on prior art installations, where several different worker or teams had to engage with the different elements of the prior art apparatus.

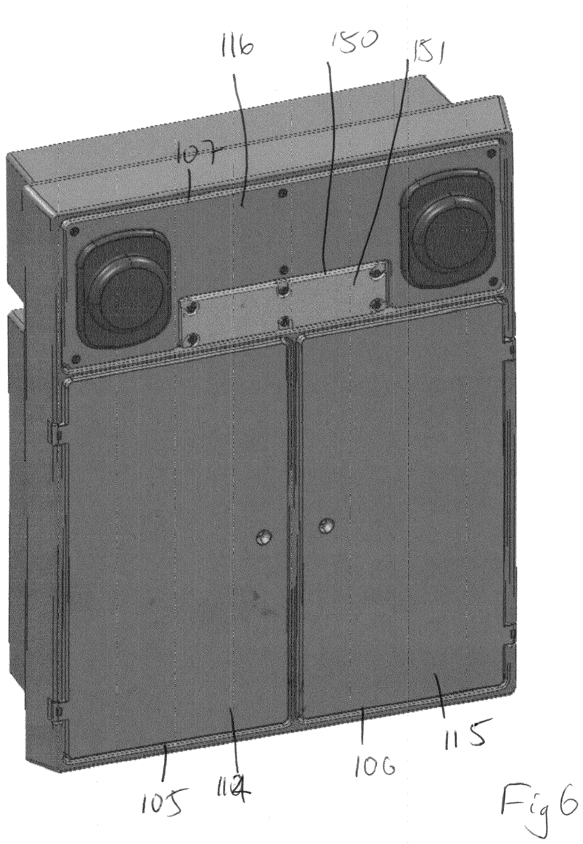

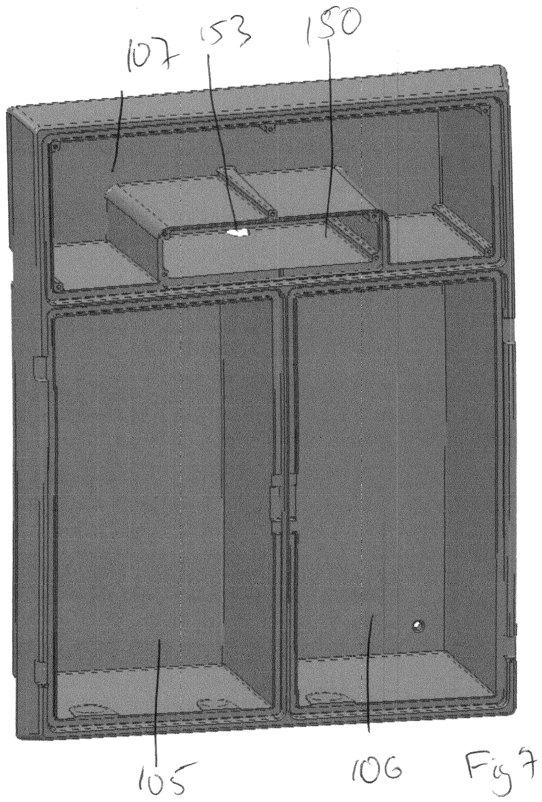

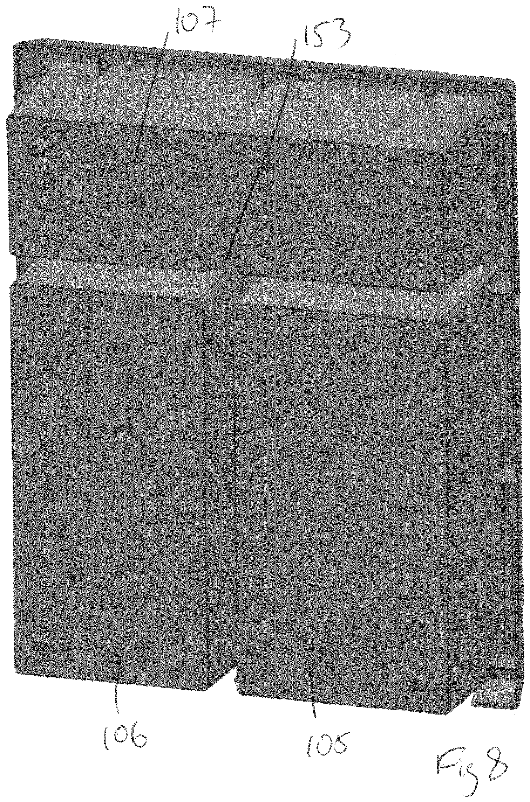

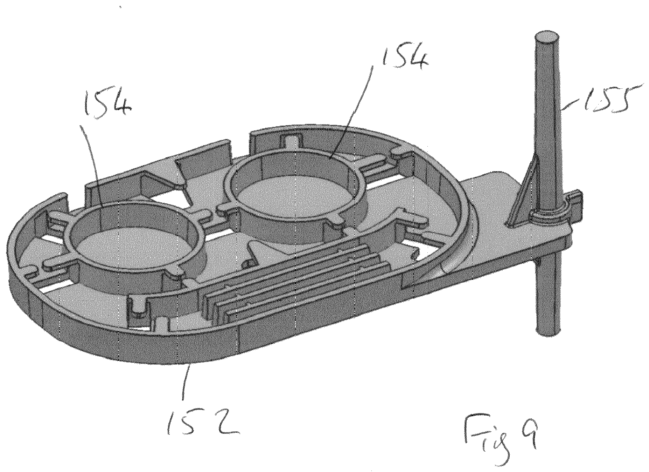

An enclosure 101 in accordance with a second embodiment of the invention is shown in Figures 6 to 11 of the accompanying drawings. Features corresponding to those of the first embodiment have been given corresponding reference numerals, raised by 100.

As in the first embodiment, this enclose has first 105, second 106 and third 107 chambers closed by doors 114, 115, 116. These three chambers 105, 106, 107 can again contain a gas meter, an electricity meter and electric vehicle charging circuitry respectively.

In this embodiment, there is provided a fourth, fibre chamber 150 having its own door 151, carved out of space in the third chamber 107. This chamber can be used for terminating or splicing fibre-optic cables, such as can be used to provide digital network and/or cable television connections. Such cable can enter and exit the fibre chamber 150 through an orifice 153 in the rear of the fibre chamber 150.

Inside the chamber, there is provided a splicing tray 152. This can be used to support loop(s) of cable around circular supports 154 so that it can be spliced. An verticle axle 155 provides support for the tray 152 in the fibre chamber 150.

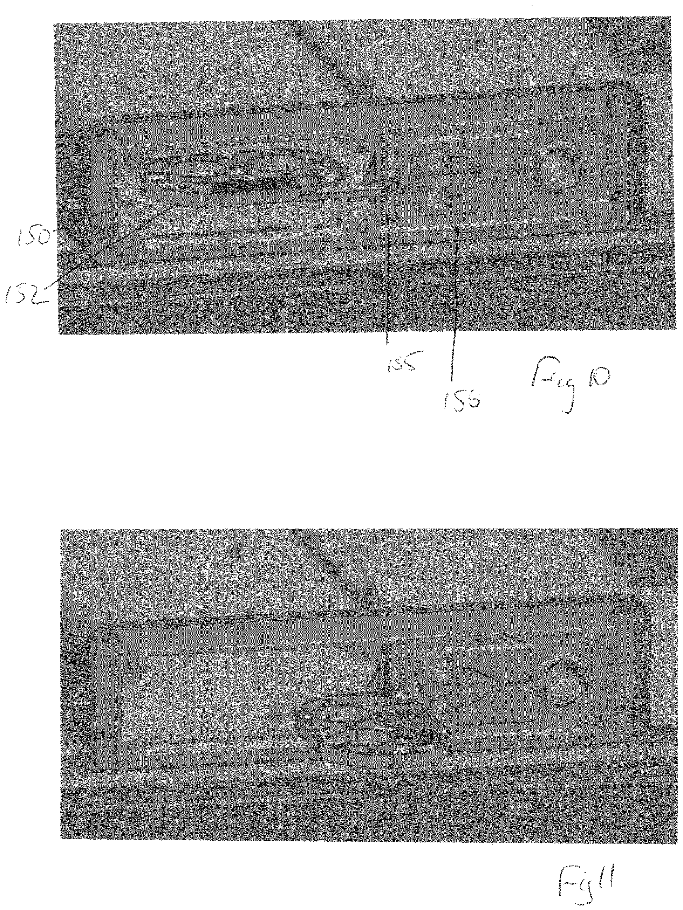

The axle 155 allows the tray 152 to be pivoted into and out of the fibre chamber when access is required to the fibre-optic cable. The axle 155 is rotatably mounted in a faceplate 156 which caps the front end of the fibre chamber 150. This allows the tray 152 to pivot between the positions shown in Figure 10 (retracted into the fibre chamber 150) and Figure 11 (extending out of the fibre chamber 150 so that access can be had to the fibre).

Any of the doors can be provided with locks, either key operated or remoted operated, typically by using mobile telecommunication devices. This allows only authorised personnel to access the chambers. The enclosure may be provided with temperature or gas sensors, which may transmit their outputs to a remote location, so that a warning can be provided if the enclosure is overheating or leaking (potentially flammable) gas.

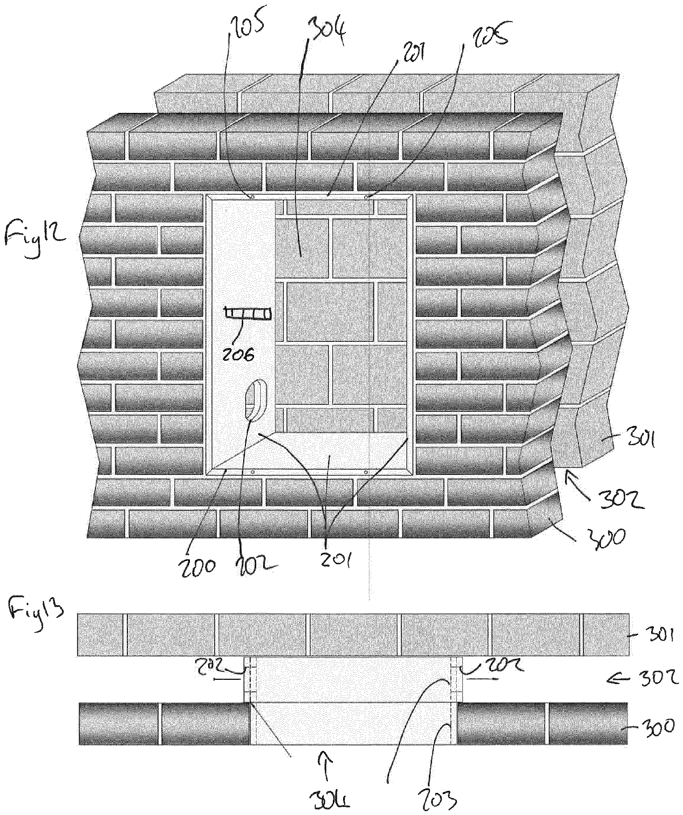

In a third embodiment of the invention, shown in Figures 12 and 13 of the accompanying drawings, a cradle 200 is shown. Whilst in the preceding embodiments the enclosure 1, 101 could be directly installed into the brickwork 300 of a building, the cradle 200 can be used as an intermediary.

In this embodiment, the cradle 200 is of the form of a cuboid box open at front and back faces, so that it has four walls 201. Apertures 202 in the side walls allow for access for (e.g.) gas pipework or electrical wiring. Apertures akin to aperture 202 can be provided in any wall as required.

The walls 201 have two portions moving from front to back. A front portion 203 is thinner than a rear portion 204. This is useful with cavity walls, where (for example) a front layer of brickwork 300 is separated from a rear layer of blockwork 301 by a gap 302. The front portion 203 fits snugly within an aperture 304 in the brickwork 300, whereas the rear portion is wider than the aperture 304. This retains the cradle 200 securely in the brickwork 300. The apertures 202 allow for access into gap 302.

As such, the cradle can be installed when the building is being built, either by being built into the brickwork 300 as it is laid, or by the aperture 304 being cut out of the brickwork 300 after it is laid. This can be carried out by a first operative, such as a bricklayer.

At a later point in time, a different second operative can install one of the enclosures 1, 101 discussed above, and secure that to the cradle 200, which would fit inside walls 201. The enclosure 1, 101 can then be fixed to the cradle 200 by screwing to screw holes 205 or by a ratchet mechanism 206 on the inside of walls 201, which allows insertion of the enclosure 1 into the cradle 200 but will not (unless disengaged) allow for it to be removed. This second operative could be a skilled meter installer.

As such, the number of operatives required to install gas and electricity meters, and additionally potentially EV charging circuitry and fibre cable connectivity can be reduced, and more flexibility provided for the timing of their attendance at the building.

In this embodiment, the cradle 200 is of the form of a cuboid box open at front and back faces, so that it has four walls 201. Apertures 202 in the side walls allow for access for (e.g.) gas pipework or electrical wiring. Apertures akin to aperture 202 can be provided in any wall as required.

The walls 201 have two portions moving from front to back. A front portion 203 is thinner than a rear portion 204. This is useful with cavity walls, where (for example) a front layer of brickwork 300 is separated from a rear layer of blockwork 301 by a gap 302. The front portion 203 fits snugly within an aperture 304 in the brickwork 300, whereas the rear portion is wider than the aperture 304. This retains the cradle 200 securely in the brickwork 300. The apertures 202 allow for access into gap 302.

As such, the cradle can be installed when the building is being built, either by being built into the brickwork 300 as it is laid, or by the aperture 304 being cut out of the brickwork 300 after it is laid. This can be carried out by a first operative, such as a bricklayer.

At a later point in time, a different second operative can install one of the enclosures 1, 101 discussed above, and secure that to the cradle 200, which would fit inside walls 201. The enclosure 1, 101 can then be fixed to the cradle 200 by screwing to screw holes 205 or by a ratchet mechanism 206 on the inside of walls 201, which allows insertion of the enclosure 1 into the cradle 200 but will not (unless disengaged) allow for it to be removed. This second operative could be a skilled meter installer.

As such, the number of operatives required to install gas and electricity meters, and additionally potentially EV charging circuitry and fibre cable connectivity can be reduced, and more flexibility provided for the timing of their attendance at the building.

## Claims

1. An enclosure defining at least three chambers separated by a plurality of walls, the chambers comprising a first chamber, a second chamber and a third chamber, the enclosure further comprising an electricity meter in the first chamber, a gas meter in the second chamber, and charging circuitry for an electric vehicle in the third chamber.

2. The enclosure of claim 1, in which at least one of the walls comprises a hollow skin filled with fire-retardant material and optionally a further plurality of the walls comprise a hollow skin filled with fire-retardant material, with the fire-retardant material of each of the plurality of walls all being connected.

3. The enclosure of any preceding claim, in which each chamber is provided with a hinged door on a front surface of the enclosure in which optionally the charging circuitry comprises an engagement means to connect the charging circuitry to the electric vehicle, with the engagement means on, or passing through, the door of the third chamber.

4. The enclosure of any preceding claim, comprising a conduit for a ground connection for the charging circuitry, which comprises a passageway from the third chamber through at least one of the walls to an exit point external to the chambers, in which optionally the passageway runs within one of the walls along a length of that wall.

5. The enclosure of any preceding claim, fitted with the electricity meter, the gas meter and the charging circuitry before it is mounted on a building, typically on a wall.

6. The enclosure of any preceding claim, in which at least one of the electricity meter, the gas meter and the charging circuitry is arranged to transmit data concerning their operation to a remote location, and/or to receive instructions as to their operation from a remote location.

7. The enclosure of any preceding claim, in which the enclosure comprises a light, which comprises a control circuit comprising at least one of a light sensor and a movement sensor.

8. The enclosure of any preceding claim, defining a fibre chamber, containing apparatus for terminating or splicing a fibre optic cable typically comprising a tray arranged to receive an optical fibre and to guide the fibre, typically around at least one loop.

9. The enclosure of claim 8, in which the tray is pivotally mounted in the fourth chamber; the tray having a retracted position where it is received within the fourth chamber and a protruding position where it protrudes out of the fourth chamber, with a transition between the retracted and protruding positions involving the tray pivoting about the pivotal mounting.

10. The enclosure of any preceding claim, comprising a cradle by means of which the enclosure is mountable on a building, optionally in which a body part of the enclosure comprising the walls defining the chambers is provided with means for engaging the cradle, being releasable means, or one-time means that, once engaged, do not release.

11. A method of installing the enclosure of any preceding claim, comprising taking the enclosure with the gas meter and electricity meter already installed therein and then fixing the enclosure to a building.

12. The method of claim 11, in which the enclosure is in accordance with claim 10, the method comprising first installing the cradle without the body on the building, and subsequently fixing the body to the cradle.

13. An enclosure for installation in a building, the enclosure comprising:
a body part defining walls defining at least one chamber and
a cradle by means of which the enclosure is mountable on a building;
in which optionally the cradle is capable of separate installation on the building, such that the cradle can be installed at a first time and the body part installed in the cradle at a later time.

14. The enclosure of claim 13, in which the body part is provided with means for engaging the cradle being one-time means that, once engaged, do not release.

15. A method of installing the enclosure of claim 13 or claim 14, comprising fixing the cradle to the building and then fixing the body part to the cradle.
